Europäisches Patentamt

**European Patent Office**

**Office européen des brevets**

(19)

(11) Publication number: **0 174 072**
A2

(12) **EUROPEAN PATENT APPLICATION**

(21) Application number: **85304834.6**

(22) Date of filing: **05.07.85**

(51) Int. Cl.⁴: **F 16 B 21/10**
**F 16 B 41/00, F 16 B 5/00**
**F 16 B 1/00** .

(30) Priority: **03.08.84 GB 8419891**

(43) Date of publication of application:
**12.03.86 Bulletin 86/11**

(84) Designated Contracting States:
**DE FR IT NL SE**

(71) Applicant: **LATCHWAYS LIMITED**
**3 St. Mary Street**
**Chippenham Wiltshire, SN15 3JL(GB)**

(72) Inventor: **Tupper, Alan William**
**Leigh Delamere House Leigh Delamere**
**Chippenham Wiltshire, SN14 6JZ(GB)**

(74) Representative: **Ben-Nathan, Laurence Albert· et al,**
**c/o MICHAEL BURNSIDE & PARTNERS 2 Serjeants' Inn**
**Fleet Street**
**London EC4Y 1HL(GB)**

(54) **Releasable connector device.**

(57) A connector device adapted to provide an initial location of two parts (10,11) to be clamped together by a simple insertion of the device into aligned apertures in the parts, the device comprising a threaded shank (13) for receiving a nut (15) and latching means provided on the shank, and including a rotary pawl (19) and resilient control means (22) acting thereon for locating the pawl in a series of angular positions during latching and release sequences of the device.

FIG.2.

EP 0 174 072 A2

This invention relates to a releasable connector device in the form of a threaded pin or bolt for securing together a plurality of parts.

There are many instances in mechanical assemblies in which separate parts are bolted together where it would be desirable to have connector devices which can be engaged easily to form an initial connection and then tightened to make the final bolted assembly. For example, when two parts which are relatively awkward to handle, such as a vehicle engine and a gearbox, are to be bolted together, it would be an advantage for an initial connection to be made by devices which can be engaged between the parts with the minimum of manipulation allowing the final firm connection to be made in the usual way by tightening a nut engaged on a threaded shank of the device. Also when a plurality of parts are connected together by a nut on a threaded bolt, it could be an advantage in many instances to be able to release each part in succession by a relatively simple operation after the securing nut has been untightened and removed, without all the parts being immediately released together. Furthermore, it is advantageous for some applications to have connector devices which provide a safety catch in case the tightening nut should fail in operation. The invention seeks to provide an improved connector device which has at least some of these advantages.

The invention provides a connector device comprising a threaded shank for receiving a nut, an abutment surface projecting from the shank for abutting directly or indirectly against one of a plurality of parts to be connected together which have apertures in which said shank is engaged in use, and latching means provided on the shank at a position spaced from

- 2 -

0174072

said abutment surface, said latching means comprising at least one pawl mounted within said shank for rotation between angular positions in which it does and does not project outwardly of the shank, and resilient control means acting on the pawl to locate the pawl in a series of angular positions during an operating sequence of the device, the arrangement being such that, after engagement of the shank through said apertures in said parts, the pawl is located by said control means to project from the shank for latching with one of said parts to prevent withdrawal of the shank therefrom, and is positioned by the control device to allow withdrawal of the shank, on subsequent movement of the shank to disengage the pawl from its latched condition with that part. There is also provided a nut for cooperation with the threaded shank for effecting a final tight connection of said parts after engagement of the shank therethrough, and, in some embodiments, a spacer member on which a nut acts in use, the nut or the spacer member being adapted to provide a space around the shank adjacent one of said parts against which the nut or the spacer member engages in use, for accommodating a portion of the pawl which projects outwardly of the shank when the pawl is in its latched condition as aforesaid.

Resilient means may be provided for location on said shank to act, in use, between said abutment surface and said part with which it cooperates in use, to maintain said pawl in its latched condition. When said nut is removed from the shank, movement of the device further into said apertures against the action of that resilient means results in the pawl disengaging from the one of said parts with which it cooperates in its latched condition and being rotated by said first-mentioned resilient means to a position permitting subsequent withdrawl of the shank through the apertures in said parts. It will be appreciated that a plurality of parts can be accommodated on said shank but they can only be removed therefrom one by one by successive operations of said latching means.

Embodiments of the invention will now be described by way of example and with reference to the accompanying drawings, in which:-

Figure 1 is a side view of two parts held together by a connector device embodying the invention;

Figure 2 is a cross-section through the assembly of Figure 1;

Figures 3, 3A and 3B are respective cross-sectional details of part of the assembly of Figure 1 and of two other embodiments illustrating a tightened condition of the connector device; and

Figure 4 is a perspective view of a spacer member of the connector device of Figure 1.

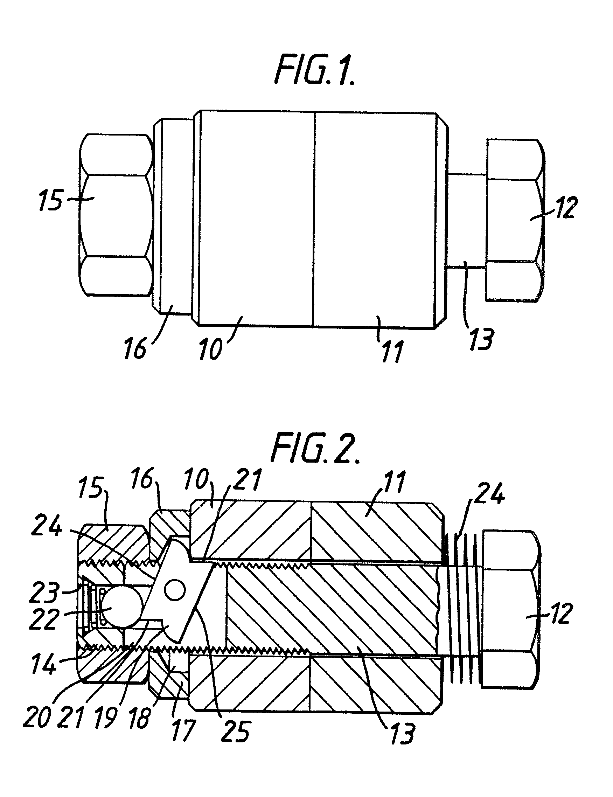

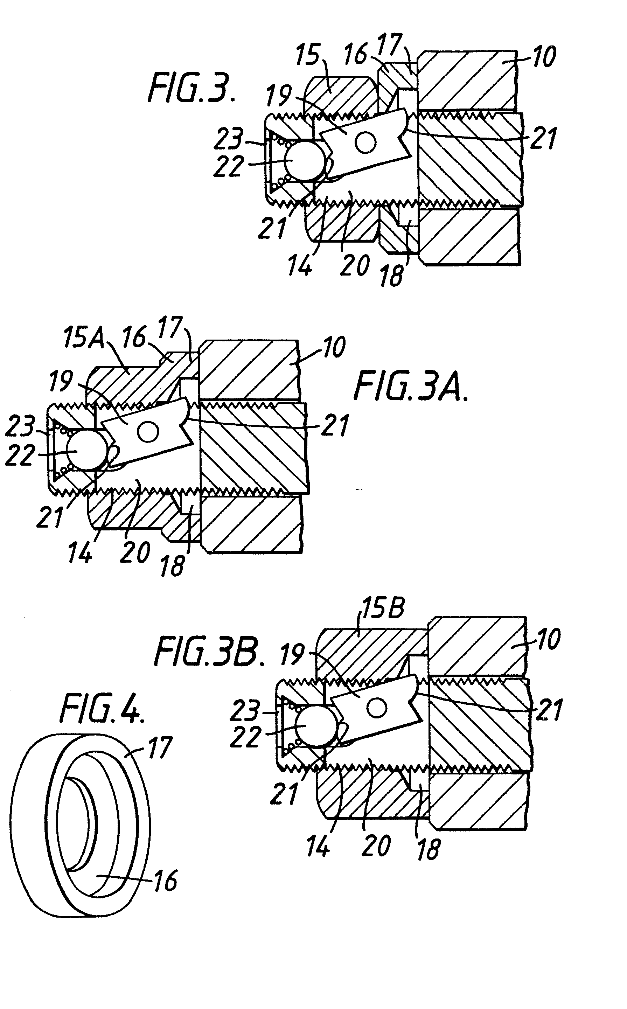

Referring to the drawings, there is shown a connector device in accordance with the invention for bolting together two parts represented in the drawings by two abutting sleeve members 10,11. The device comprises a bolt member having a hexagonal head 12 and a shank 13 which is threaded at 14 along its length from the free end thereof. A hexagonal nut 15 cooperates with the threaded portion of the shank 13 which projects from an end face of part 10 after the shank has been inserted through the aligned apertures in parts 10 and 11. An annular spacer member 16 is also provided on the projecting portion of the shank 13 and is disposed between the nut 15 and the part 10. The spacer has an axially projecting annular flange 17, the free end of which engages an end face of the part 10. As seen in Figures 2 and 3, an annular space 18 is defined around the periphery of the shank 13 adjacent the part 10 for a purpose to be described below.

The connector device also includes a latching mechanism provided by a pawl 19 rotatably mounted in a transverse slot 20 in the shank 13 near the free end thereof. The pawl is generally rectangular but has notches 21 provided in a pair of opposite shorter ends thereof. The rotary position of the pawl is controlled by spring-loaded ball 22 which is disposed in a further slot 23 in the free end of the shank 13, which intersects the slot 20. A compression spring 24 is provided on the shank 13 adjacent to the head 12 of the device to act between the head and the adjacent part 11. This spring could desirably be accommodated in the bolt head under compression.

In operation, the shank 13 of the connector device, without the nut 15 and the spacer 16, is inserted into the aligned apertures in the parts 10 and 11 to be bolted together. The pawl 19, which as illustrated in Figure 3, projects slightly from the periphery of the shank 13, is moved to a position completely within the shank, against the action of spring-biassed ball 22, as it passes through the aligned apertures in the parts 10 and 12. When the free end of the shank 13 emerges from those apertures, the ball 22 then acts on the pawl to bring it into the position shown in Figure 3. Release of the connector device then results in the pawl being brought into its latching position as shown in Figure 2 by the action of compression spring 23. In this way, the two parts are held together with withdrawal of the connector device prevented by the pawl 19, a notched end 21 of which receives an inner edge of the part 10, as shown in Figure 2, thereby preventing rotation of the pawl and effecting the latched condition of the device. In order to effect a final tightening of the connector device, the spacer 16 is positioned on the projecting threaded end of the shank and the nut 15 is threadedly engaged therewith, as shown in Figure 2. The annular space 18 defined within the spacer member 16 accommodates the pawl 19, in its latched condition, preparatory to tightening of the nut 15 to effect the final rigid connection. When the nut 15 is tightened, as shown in Figure 3, the pawl 19 disengages from the part 10 and the clamping force is then effected by the nut 15 acting through the spacer 16.

For disassembly, the nut and spacer are removed but withdrawal of the shank 13 from the parts 10 and 11 is prevented by the pawl 19 which is brought into its latched condition as shown in Figure 2 on any attempt to withdraw the shank 13. This causes the ball 22 to disengage from notch 21 and to act on one of the longer side surfaces 24 of the pawl, as shown in Figure 2. If the shank 13 is then moved in the opposite direction further in to the parts 10 and 11, the pawl 19, after disengagement from part 10, is then rotated anti-clockwise by the action of the spring-loaded ball 22 so that it is in a position in which its opposite longer side surface 25 will abut the end face of part 10 on subsequent withdrawal of the shank through the aligned apertures in parts 10 and 11. In this position the pawl can then be freely rotated in an anti-clockwise direction to allow withdrawal of the shank from the parts 10 and 11. It will be appreciated that this positioning of the pawl by the spring-loaded ball 22 does not occur during a tightening operation when the nut and spacer are engaged with the threaded end of the shank 13 because the pawl 19 engages the inner periphery of the spacer 16 as it disengages from the part 10 during a tightening operation such that it remains in a position in which the spring-loaded ball 22 is disposed in an end surface of the pawl rather than remaining engaged with the longer side surface 24 of the pawl.

A fuller description of this type of latching device comprising a rotary pawl and a spring-loaded control member, is given in International Application Publication No. WO 84/01414, and corresponding European Patent Application Serial No. 0,120,047 , the disclosure of which

is incorporated herein by reference.

It will therefore be appreciated that two parts can be secured together by a connector device according to the invention such that the initial insertion of the device without the tightening nut achieves an initial latch connection by a simple insertion operation. Final tightening of the device can then be achieved using the tightening nut. In this way, two parts can be initially located and held together by a simple operation without having to thread a nut onto a threaded shank. Final tightening can then be achieved after the initial connection has been made, with a tightening nut. The reverse procedure for disconnecting the two parts is also facilitated for similar reasons. A further advantage is that the latching mechanism provides a safety catch in the event that the nut threaded onto the shank should fail.

It will be appreciated that the spacer 16 could be integral with the nut 15A (Fig. 3A) or indeed the annular space 18 could be provided by forming an internal chamfer at one end of a suitably sized nut 15B (Fig. 3B).

It will further be appreciated that when several parts (10,11) are held on the bolt, after removal of the tightening nut, each part can be removed in turn by manipulation of the shank 13 in order to disengage the latching mechanism therefrom. In this way, each of the parts can be removed in succession as required instead of a complete disconnection of all of the parts once the locking nut has been removed.

## CLAIMS

1. A connector device comprising a threaded shank for receiving a nut, an abutment surface projecting from the shank for acting directly or indirectly against one of a plurality of parts to be connected together which have apertures in which said shank is engaged in use, and latching means provided on the shank at a position spaced from said abutment surface, said latching means comprising at least one pawl mounted within said shank for rotation between angular positions in which it does and does not project outwardly of the shank, and resilient control means acting on the pawl to locate the pawl in a series of angular positions during an operating sequence of the device, the arrangement being such that, after engagement of the shank through said apertures in said parts, the pawl is located by said control means to project from the shank for latching with one of said parts to prevent withdrawal of the shank therefrom, and is positioned by the control device to allow withdrawal of the shank, on subsequent movement of the shank to disengage the pawl from its latched condition with that part.

2. A device according to Claim 1 further comprising a nut for cooperation with the threaded shank for effecting a final tight connection of said parts after engagement of the shank therethrough, the nut being adapted to provide a space around the shank adjacent one of said parts against which the nut engages in use, for accommodating a portion of the pawl which projects outwardly of the shank when the pawl is in its latched condition as aforesaid.

3. A device according to Claim 1 further comprising a nut for cooperation with the threaded shank for effecting a final tight connection of said parts after engagement of the shank therethrough and a spacer member on which the nut acts in use, the spacer being adapted to provide a spacer around the shank adjacent one of said parts, against which the spacer engages in use, for accommodating a portion of the pawl which projects outwardly of the shank when the pawl is in its latched condition as aforesaid.

4. A device according to Claim 3 wherein the spacer is formed integrally with the nut.

5. A device according to any of Claims 1 to 4 wherein resilient means are provided for location on said shank to act, in use, between said abutment surface and said part with which it cooperates in use, to maintain said pawl in its latched condition.

6. A device according to any of Claims 1 to 5 wherein said resilient control means comprises a spring biassed control member engaged with the periphery of the pawl.

7. A device according to any of Claims 1 to 6 wherein the pawl has a pair of opposed peripheral end surfaces in which respective notches are formed to receive an edge portion of said one of said parts in said latched condition.

8. A device according to any of Claims 1 to 7 wherein said pawl is disposed generally within a transverse slot formed in said shank, the pawl being rotatably mounted therein so that it can project laterally of the shank in said latched condition.

FIG.1.

FIG.2.

0174072

FIG.3.

FIG.3A.

FIG.3B.

FIG.4.